# EUROPEAN PATENT SPECIFICATION

(11) **EP 2 434 799 B1**
(45) Date of publication and mention of the grant of the patent: **06.02.2019**
(21) Application number: 10853493.4
(22) Date of filing: 29.09.2010
(51) Int. Cl.: H04W 24/04, G06F 11/36, H04W 24/02, H04W 24/08

(54) **INTELLIGENT DEBUGGING PLATFORM SYSTEM AND DEBUGGING METHOD FOR WIRELESS COMMUNICATION SYSTEM**
INTELLIGENTES FEHLERBESEITIGUNGSSYSTEM UND FEHLERBESEITIGUNGSVERFAHREN FÜR DRAHTLOSES KOMMUNIKATIONSSYSTEM
SYSTÈME DE PLATEFORME DE DÉBOGAGE INTELLIGENT ET PROCÉDÉ DE DÉBOGAGE DESTINÉ À UN SYSTÈME DE COMMUNICATION SANS FIL

(30) Priority: 23.06.2010 CN 201010211178
(43) Date of publication of application: 28.03.2012
(73) Proprietor: ZTE Corporation, Shenzhen, Guangdong 518057 (CN)
(72) Inventor: XIE, Liqiang, Shenzhen, Guangdong 518057 (CN); CHEN, Zhibing, Shenzhen, Guangdong 518057 (CN); XIA, Zhihai, Shenzhen, Guangdong 518057 (CN)
(74) Representative: Manitz Finsterwald Patentanwälte PartmbB
(86) International application number: PCT/CN2010/077481
(87) International publication number: WO 2011/160354

(56) References cited:
- WO-A2-98/24222
- CN-A- 1 607 778
- CN-A- 1 635 478
- CN-A- 101 217 770
- KR-A- 20000 033 526
- US-A1- 2009 307 652
- US-B1- 7 274 932
- MORA M ET AL: "ERMAS: AN EXPERT RADIO MOBILE ASSISTANCE SYSTEM", EXPERT SYSTEMS & THEIR APPLICATIONS ELEVENTH INTERNATIONALCONFERENCE, 27-31 MAY 1991, AVIGNON, NANTERRE, FR, vol. 5, 27 May 1991 (1991-05-27), pages 91-102, XP000676897,
- ETSI: "Universal Mobile Telecommunications System (UMTS); Network and Service Management Requirements for UMTS (UMTS 21.06, version 3.0.0)", 3GPP DRAFT; S5-99017, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis; 20010731, 31 July 2001 (2001-07-31), XP050290412, [retrieved on 2001-07-31]

## Description

### Technical Field

The present invention relates to a debug technology in the field of wireless communication, and more particularly, to an intelligent debugging platform system and a debugging method used in wireless communication systems.

### Background of the Related Art

A typical wireless communication system generally comprises a Mobile Switching Subsystem (MSS), a Base Station Subsystem (BSS) and a Mobile Station (MS). The Mobile Switching Subsystem (MSS) and the Base Station Subsystem (BSS) are generally called as foreground; the Operation & Maintenance Center (OMC) is called as background.

In the wireless communication system, the normal operation of the system needs cooperation between different single board modules. In the whole process, there are many signaling interfaces, service flows are complicated and system resources are enormous. At present, for the wireless communication system, a series of modules, such as single board operation information collectors, signaling collectors, service observation collectors, base station data collectors, abnormity probe collectors, and dynamic resource collectors, are used to manage and monitor single board operation conditions, radio frequency management, signal signaling conditions, access operation conditions, and resource allocation conditions of the system.

However, professionalism of the aforementioned debugging modules is usually very strong, and liaison between each debugging module is very few, thus the operation and maintenance personnel need to have a very strong expertise to handle the debugging modules well, and the dependence on operators' personal skill levels is strong. The difference in the personal skill levels, however, may result in operation and maintenance errors, causing unnecessary losses. Therefore, there is a need for an intelligent debugging platform system and a debugging method used in the wireless communication system so as to assist the operation and maintenance personnel in debugging and maintaining.

The document MORA M et al "ERMAS: AN EXPERT RADIO MOBILE ASSISTANCE SYSTEM", Expert Systems & Their Applications Eleventh International Conference, May 1991, discloses a system for each CC that continuously carries out an automatic, dynamic and real time monitoring of transmission equipments and CC equipments in order to have a complete control from one console and to improve the quality of the service. Alarms monitoring can be managed by an Expert Module which elaborates alarms with heuristic knowledge useful.

The document ETSI "Universal Mobile Telecommunications System (UMTS); Network and Service Management Requirements for UMTS (UMTS 21.06, version 3.0.0)" discloses a method for performing monitoring. Network management shall support the use of measurements from e.g. handover, user registration, location updating and paging, for performance management, maintenance and planning purposes.

The document WO 98/24222 A2 discloses a Software Fault Management (SFM) system for managing software faults in a managed mobile telecommunications network, said SFM system comprising: an Intelligent Management Information Base (I-MIB) comprising a Management Information Base (MIB) and a Knowledge Base (KB), said KB including a functional model of said managed network; and an intelligent multi-agent portion having a plurality of agents which process said software faults utilizing information from said 1-MIB.

The document US 7 274 932 B1 discloses a computer-implemented method for troubleshooting a problem associated with a cellular network site, comprising: receiving a symptom input describing the symptoms of the problem associated with the cellular network site; determining whether at least one of a plurality of rules is invoked by the symptom input, wherein the plurality of rules comprise a plurality of if-then statements, wherein the plurality of if-then statements comprise a plurality of if portions and a plurality of then portions, the then portions corresponding to potential solutions to the problem, and wherein at least a portion of the plurality of rules is generated by a software application for interviewing cellular network site engineers; if so, then outputting a potential solution to the problem wherein the potential solution is determined by the invoked rule; and storing the symptoms in a provisional rules list when none of the plurality of rules are invoked.

### Content of the Invention

The invention is set out in the appended set of claims. The embodiments and/or examples of the following description which are not covered by the appended claims are considered as not being part of the present invention.

A technical problem to be solved by the present invention is to provide an intelligent debugging platform system and a debugging method use in a wireless communication system such that various debugging tools can work normally on a platform without changing the original working mode and the operation and maintenance personnel can perform intelligent conversion between the debugging tools.

In order to solve the problem described above, the present invention provides a system and a method as defined in the independent claims.

An intelligent debugging platform system comprising a debugging tool module, a task conversion module, a debug analysis module, and a task arousal module, wherein:
the debugging tool module is configured to provide a variety of debugging tools;
the debug analysis module is configured to analyze debug data collected and reported by the current debugging tool and determine the next debugging tool required to be invoked based on a debug analysis strategy;
the task conversion module is configured to normalize a debug task of the current debugging tool to acquire unified task information, and then convert the unified task information into a debug task corresponding to the next debugging tool; and
the task arousal module is configured to start up the next debugging tool required to be invoked automatically or manually by prompting an operator to execute the debug task corresponding to the next debugging tool.

The debug analysis strategy is configuration information being in one-to-one correspondence with the debugging tools, each debugging tool corresponding to one debug analysis strategy, and the configuration information of the debug analysis strategy comprises debug conditions and debugging actions, wherein the debugging actions comprise information of the next debugging tool required to be invoked when the debug conditions are met.

The task conversion module is configured to acquire the unified task information obtained by normalizing the debug task, the unified task information containing time segment information, task type information, specific normalized task information, wherein the time segment information is used to reflect debug task time; the task type information is used to reflect task type, including IMSI, cell, and base station task type; the specific normalized task information is specific unified task information acquired by normalizing task data of the debugging tools into one type.

The debugging tools in the debugging tool module comprise one of the following tools:
a single board operation information collector and single board operation information collection module, a signaling collector and signaling collection module, a service observation collector and service observation module, a base station data collector and base station data collection module, an abnormality probe collector and abnormality probe collection module, a dynamic resource collector and dynamic resource monitoring module, a timer controller and timer module, or a radio frequency control power controller and radio frequency power management module.

A debugging method of an intelligent debugging platform system comprises:
analyzing data collected and reported by the current debugging tool, and determining the next debugging tool required to be invoked based on a debug analysis strategy;
normalizing a debug task of the current debugging tool to acquire unified task information, and then convert the unified task information into a debug task corresponding to the next debugging tool; and
starting up the next debugging tool required to be invoked automatically or manually by prompting an operator to execute the corresponding debug task.

The debug analysis strategy is configuration information being in one-to-one correspondence with the debugging tools, each debugging tool corresponding to one debug analysis strategy, and the configuration information of the debug analysis strategy comprises debug conditions and debugging actions, wherein the debugging actions comprise information of the next debugging tool required to be invoked when the debug conditions are met.

The unified task information contains time segment information, task type information, specific normalized task information, wherein the time segment information is used to reflect debug task time; the task type information is used to reflect task type, including IMSI, cell, and base station task type; the specific normalized task information is specific unified task information acquired by normalizing task data of the debugging tools into one type.

The debugging tools in the debugging tool module comprise one of the following tools:
a single board operation information collector and single board operation information collection module, a signaling collector and signaling collection module, a service observation collector and service observation module, a base station data collector and base station data collection module, an abnormality probe collector and abnormality probe collection module, a dynamic resource collector and dynamic resource monitoring module, a timer controller and timer module, or a radio frequency control power controller and radio frequency power management module.

In the intelligent debugging platform system and the debugging method in accordance with the present invention, the debugging tool module provides various professional debugging tools; the debug analysis module analyzes actual debug data conditions to acquire the debug analysis strategy, and determines the debugging tool required to be invoked according to the debug analysis strategy; the task conversion module converts various collection and analysis tasks on a unified platform; the task arousal module automatically or manually activates various related debugging tools. Using the intelligent debugging platform in accordance with the present invention, when the debug task is performed using a certain debugging tool, other relevant debugging tools are started up intelligently to provide a convenient and practical debugging platform for the research and development personnel to debug the system and localize faults and for the arrangement personnel to make an arrangement smoothly such that the relevant personnel can quickly localize the faults and acquire system resource allocation conditions without re-inputting complicated debug conditions to start up another task, thus saving the debugging and arranging time and improving the debugging and opening efficiency.

### Brief Description of Drawings

FIG. 1 is a schematic diagram of modules in an intelligent debugging platform system in accordance with the present invention;
FIG. 2 is a flow chart of a process for a debug analysis module to execute debug analysis in accordance with an embodiment of the present invention;
FIG. 3 is a flow chart of a process for a task conversion module to execute task conversion in accordance with an embodiment of the present invention;
FIG. 4 is a flow chart of a process for a task arousal module to execute task arousal in accordance with an embodiment of the present invention; and
FIG. 5 is a schematic diagram of an application example of an intelligent debugging platform used in a CDMA wireless wideband access system.

### Preferred Embodiments of the Present Invention

In order to understand objects, technical schemes and advantages of the present invention more clearly, the present invention will be further described in detail in conjunction with the accompanying figures.

An intelligent debugging platform in accordance with the present invention analyzes debug data of debugging tools in a debugging tool module, determines another debugging tool required to be invoked in the next action based on a debug analysis strategy, normalizes a task of the previous debugging tool into a unified debug task, then converts the unified debug task into a specific debug task of the debugging tool required to be invoked, and starts up the debugging tool required to be invoked automatically or manually to execute the corresponding debug task. The present invention may be compatible with various professional debugging tools. The present invention can assist the debug personnel conveniently and quickly in starting up the related debugging tools without re-inputting complicated debug conditions to start up another debug task.

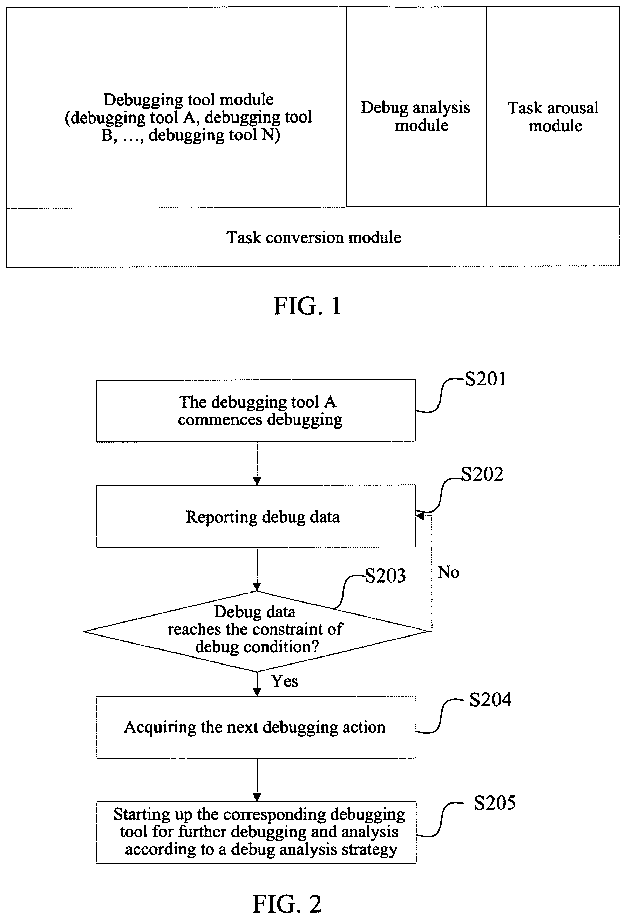

As shown in FIG. 1, an intelligent debugging platform system in accordance with the present invention comprises a debugging tool module, a task conversion module, a debug analysis module, and a task arousal module. The task conversion module is the basis of the entire platform, and the debugging tool module, the debug analysis module, and the task arousal module are parallel. Meanwhile, the debug analysis module is in the core part of all the modules and is used to analyze various debug conditions that appeared at present and automatically or manually start up the related debugging tools.

The debugging tool module is configured to provide a variety of debugging tools.

The debug analysis module is configured to analyze debug data collected and reported by the current debugging tool and determine the next debugging tool required to be invoked based on a debug analysis strategy.

The task conversion module is configured to normalize a debug task of the current debugging tool to acquire unified task information, and then convert the unified task information into a debug task corresponding to the next debugging tool.

The task arousal module is configured to start up the next debugging tool required to be invoked automatically or manually by prompting an operator to execute the debug task corresponding to the next debugging tool.

Each module in the intelligent debugging platform system shown in FIG. 1 will be further described in detail hereinafter.

The task conversion module provides a smooth and normalized task conversion mechanism such that a task of each debugging tool can be seamlessly converted on the platform. Generally, operation of a debugging tool is on the basis of the task. Because of professional reasons, the task setting and definition of each debugging tool may be inconsistent with each other, thus, the smooth and normalized task conversion mechanism provided by the task conversion module allows the normalized task of each debugging tool to be seamlessly converted on this platform.

The debug analysis module provides a series of debug analysis strategies. The debug analysis strategies comprise debug invoke strategies under a set of debug conditions and are defined as a combination of the debug conditions to the debugging invoke. In the debugging process, a role of the debug analysis strategy is that when a debugging tool analyzes an abnormal event, for example, the call drop rate is higher than an allowable value, the debugging platform can provide a series of schemes to invoke different debugging modules to execute next analysis and test.

The task arousal module provides a mechanism for arousing seamlessly any related debugging tool. When the debugging platform has provided a series of schemes to perform the next action, the task arousal mechanism can invoke, automatically or manually by prompting an operator, the debugging tools mentioned in the debug analysis strategy to operate and commence relevant analysis.

In the intelligent debugging platform system, the task conversion module, which is the basis, can convert various collection and analysis tasks on a unified platform; the task arousal module, which is an executor, activates manually or automatically various related debugging tools; the debug analysis module, which is the core, is used to analyze actual debug conditions to acquire the debug analysis strategy and to instruct the debug personnel to start up easily and quickly the related debugging tool without re-inputting complicated debug conditions to start up another task.

A debugging method of the intelligent debugging platform system in accordance with the present invention comprises the following steps:
analyzing data collected and reported by the current debugging tool, and determining the next debugging tool required to be invoked based on a debug analysis strategy;
normalizing a debug task of the current debugging tool to acquire unified task information, and then convert the unified task information into a debug task corresponding to the next debugging tool; and
starting up the next debugging tool required to be invoked automatically or manually by prompting an operator to execute the corresponding debug task.

Implementation of an intelligent debugging platform in the Code Division Multiple Access (CDMA) system and a debugging method thereof will be further described in detail respectively in conjunction with the accompanying figures.

A debugging tool module is configured to provide the debug personnel with professional debugging tools, and objects deployed for all of the debugging tools are laid particular emphasis respectively and their functions are independent.

The debug analysis module is configured to configure a debug analysis strategy for each debugging tool, analyze data collected by a debugging tool when starting up the debugging tool, acquire a debug analysis strategy corresponding to the collected data based on the analysis results, and provide the related debugging tool required to be started up automatically or manually according to the debug analysis strategy.

The debug analysis strategy is configured based on specific debugging characteristics of the debugging tool and is defined specifically as:

```
   Debug analysis strategy
   {
   Debug condition
   Debugging action
   }
```

As shown in FIG. 2, a flow chart of a working process of a debug analysis module is shown, and its debug analysis steps are as follows:
S201: the debugging tool A commences debugging;
S202: the debugging tool A reports the collected data to a debug analysis module;
S203: the debug analysis module analyzes the collected debug data to determine whether the collected debug data reaches the constraint of the debug condition in the debug analysis strategy;
S204: if the debug data reaches the constraint of the debug condition, the next debugging action is obtained;
S205: based on the debug analysis strategy, the corresponding debugging tool is started up automatically or manually for further debugging and analysis.

The task conversion module is configured to normalize the debug task based on the characteristics of the task of the debugging tool, and store the debug task in a unified way, or convert reversely the unified debug task into a specific debug task of a specific debugging tool. A manner for storing the normalized task is as follows:

```
   Task:
   {
   Time segment information
   Task type information
   Specific normalized task information
   }
```

where the time segment information is used to reflect debug task time; the task type information is used to reflect task type, such as the International Mobile Subscriber Identification Number (IMSI), cell, base station task type. The specific normalized task information is equivalent to unifying the task into one type of data, and with a simple and effective conversion rule, and is converted into the corresponding data based on task type information.

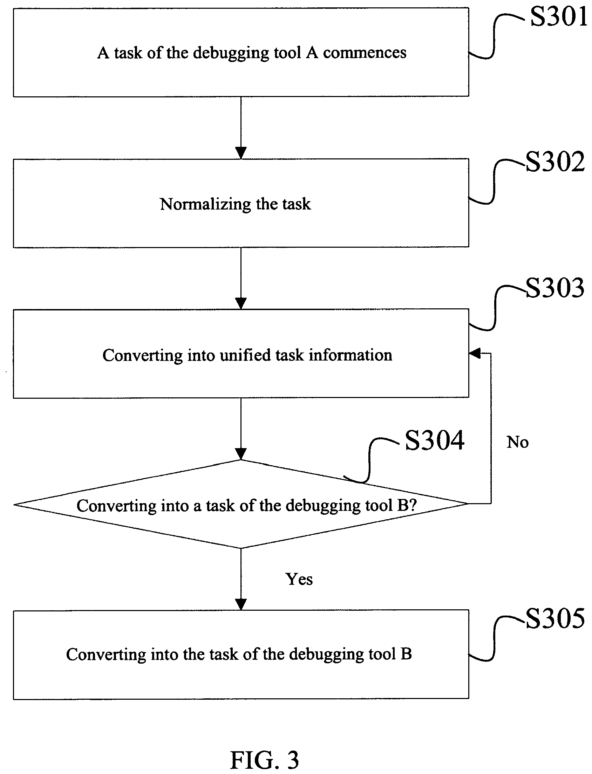

As shown in FIG. 3, a flow chart of a task conversion module is shown. The process comprises the following steps.
S301: a task of the debugging tool A commences;
S302: based on the type of the task of the debugging tool A, the task is normalized to acquire the unified task information, and after the normalization, time segment information, task type information, and specific normalized task information are filled. If the task of the debugging tool A does not provide the time segment information, the default time segment information is filled; if the task of the debugging tool A does not provide the task type information, the task type information is filled based on the key word information, such as IMSI, cell or base station.
S303-S305: according to the debug analysis strategy, the normalized and unified task information is converted into a specific task of the debugging tool B. During the converting, the information not provided in the normalized task will be provided by default.

The task arousal module is configured to convert the task of the current debugging tool into the unified task information through the task conversion module, start up the related debugging tool according to the debug analysis strategy acquired by the debug analysis module, convert the unified task information into the specific task of the related debugging tool, and start up the debugging tool for further analysis.

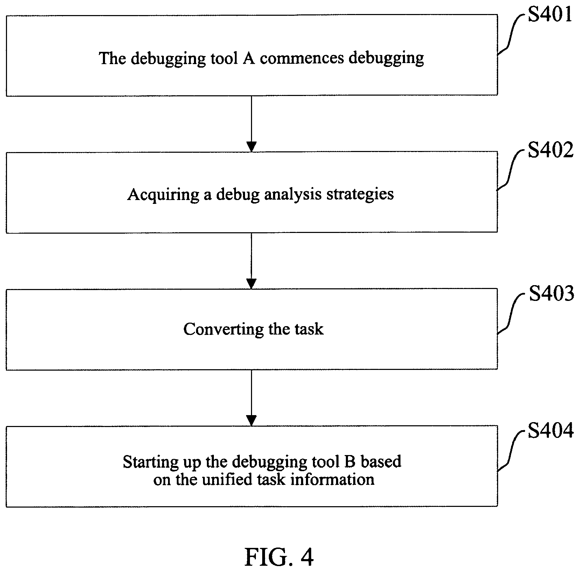

FIG. 4 is a flow chart of a task arousal module, and the process comprises the following steps.
S401: the task of the debugging tool A commences.
S402: the debug analysis module debugs and analyzes debug data of the debugging tool A to acquire a debug analysis strategy.
S403: the task conversion module normalizes and converts the debug task of the debugging tool A into the unified task information, and stores the unified task information of the current debugging tool A.
S404: the task arousal module converts the unified task information into the specific debug task of the debugging tool B according to the selected debug analysis strategy, and starts up automatically or manually the debugging tool B for next debugging.

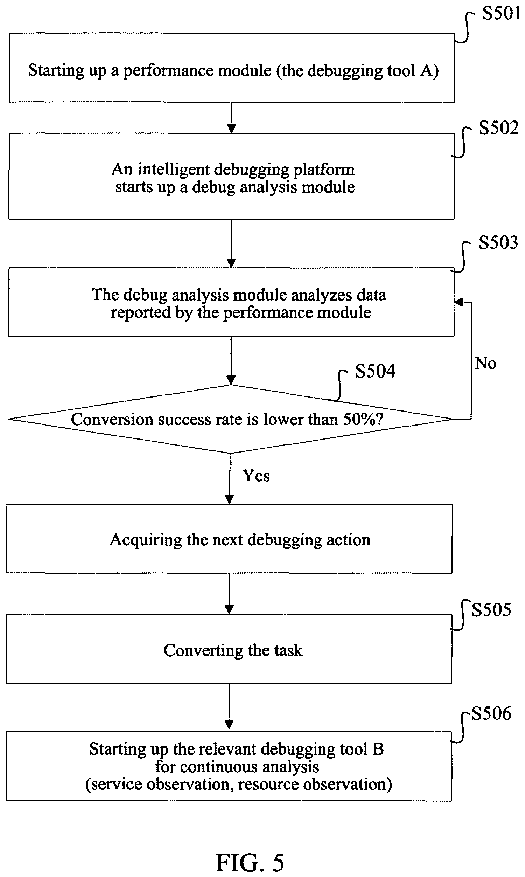

FIG. 5 is an application example of an intelligent debugging platform used in the CDMA wireless wideband access system.
S501: the debugging tool A, such as a performance module, is started up.
S502: a debug analysis module in the intelligent debugging platform is started up.
S503: the debug analysis module analyzes data reported by the debugging tool A.
S504: if the conversion success rate reported by the debugging tool A is lower than 50%, the next debugging action is obtained; otherwise the process returns to step S503.
S505: under the guidance of the debugging action, the task conversion module converts task information of the debugging tool A into normalized and unified task information.
S506: based on the unified task information, the task arousal module starts up the related debugging tool B, such as a service observation and resource observation module, for further analysis and test.

In the intelligent debugging platform system and the debugging method in accordance with the present invention, optional debugging tools comprise the following modules.

A single board operation information collector and single board operation information collection module is used to collect operation conditions of each single board on the foreground.

A signaling collector and signaling collection module is used to collect signaling operation conditions at each internal interface and standard interface.

A service observation collector and service observation module is used to collect call executive conditions of various services, the services herein comprises connection service conditions, network initial access conditions, switching conditions, release conditions and process data information.

A base station data collector and base station data collection module is used to collect data index, including base station side link and CPU utilization.

An abnormality probe collector and abnormality probe collection module is used to collect abnormal operation information during the service operation process.

A dynamic resource collector and dynamic resource monitoring module is used to provide the occluding, de-occluding and status monitoring for various resources.

A timer controller and timer module is used to provide timer configuration and query of each single board, define the timing type, timing interval and timer enabling of different timers.

A radio frequency power controller and radio frequency power management module is used to control radio frequency power of a radio frequency subsystem.

The intelligent debugging platform system and the debugging method in accordance with the present invention are applied to initial maintenance as well as fault localization in the CDMA wireless wideband access system such that initial debug personnel can acquire professional debug analysis strategy to quickly start up various debugging tools for debugging, thereby meeting different user requirements.

The above description is the preferred embodiments of the present invention only and is not intended to limit the present invention. Various modifications and variations may be made to the present invention by those skilled in the art. Any modification, equivalent substitution and improvement made within the principle of the present invention as defined in the claims should be covered in the protection scope of the present invention.

### Industrial Applicability

In the intelligent debugging platform system and the debugging method in accordance with the present invention, the debugging tool module provides various professional debugging tools; the debug analysis module analyzes actual debug data conditions to acquire the debug analysis strategy, and determines the debugging tool required to be invoked according to the debug analysis strategy; the task conversion module converts various collection and analysis tasks on a unified platform; the task arousal module automatically or manually activates various related debugging tools. Using the intelligent debugging platform in accordance with the present invention, when the debug task is performed using a certain debugging tool, other relevant debugging tools are started up intelligently to provide a convenient and practical debugging platform for the research and development personnel to debug the system and localize faults and for the arrangement personnel to make an arrangement smoothly such that the relevant personnel can quickly localize the faults and acquire system resource allocation conditions without re-inputting complicated debug conditions to start up another task, thus saving the debugging and arranging time and improving the debugging and opening efficiency.

## Claims

1. An intelligent debugging platform system for a wireless communication system, **characterized by** comprising a debugging tool module, a task conversion module, a debug analysis module, and a task arousal module, wherein
the debugging tool module is configured to provide a variety of debugging tools;
the debug analysis module is configured to analyze debug data collected and reported by the current debugging tool and determine the next debugging tool required to be invoked based on a debug analysis strategy;
the task conversion module is configured to normalize a debug task of the current debugging tool to acquire unified task information, and then convert the unified task information into a debug task corresponding to the next debugging tool; and
the task arousal module is configured to start up the next debugging tool required to be invoked automatically or manually by prompting an operator to execute the debug task corresponding to the next debugging tool,
wherein the debugging tools in the debugging tool module comprise one of the following tools:
a single board operation information collector and single board operation information collection module, configured to collect operation conditions of each single board on the foreground, a signaling collector and signaling collection module, configured to collect signaling operation conditions at each internal interface and standard interface, a service observation collector and service observation module, configured to collect call executive conditions of various services, a base station data collector and base station data collection module, configured to collect data index, including base station side link and CPU utilization, an abnormality probe collector and abnormality probe collection module, configured to collect abnormal operation information during the service operation process, a dynamic resource collector and dynamic resource monitoring module, configured to provide occluding, de-occluding and status monitoring for various resources, a timer controller and timer module, configured to provide timer configuration and query of each single board, and define timing type, timing interval and timer enabling of different timers, or a radio frequency control power controller and radio frequency power management module, configured to control radio frequency power of a radio frequency subsystem.

2. The intelligent debugging platform system according to claim 1, wherein
the debug analysis strategy is configuration information being in one-to-one correspondence with the debugging tools, each debugging tool corresponding to one debug analysis strategy, and the configuration information of the debug analysis strategy comprises debug conditions and debugging actions, wherein the debugging actions comprise information of the next debugging tool required to be invoked when the debug conditions are met.

3. The intelligent debugging platform system according to claim 1, wherein
the unified task information contains time segment information, task type information, specific normalized task information, wherein the time segment information is used to reflect debug task time; the task type information is used to reflect task type, including IMSI, cell, and base station task type; the specific normalized task information is specific unified task information acquired by normalizing task data of the debugging tools into one type.

4. A debugging method of an intelligent debugging platform system for a wireless communication system, **characterized by** comprising:
analyzing (S402) data collected and reported by the current debugging tool, and determining the next debugging tool required to be invoked based on a debug analysis strategy;
normalizing (S403) a debug task of the current debugging tool to acquire unified task information, and then convert the unified task information into a debug task corresponding to the next debugging tool, wherein the debugging tools comprise one of the following tools: a single board operation information tool for collecting operation conditions of each single board on the foreground, a signaling collection tool for collecting signaling operation conditions at each internal interface and standard interface, a service observation tool for collect ing call executive conditions of various services, a base station data collection tool for collecting data index, including base station side link and CPU utilization, an abnormality probe collection tool for collecting abnormal operation information during the service operation process, a dynamic resource resource monitoring tool for provide occluding, de-occluding and status monitoring for various resources, a timer controller tool for providing timer configuration and query of each single board, and define timing type, timing interval and timer enabling of different timers, or a radio frequency power management tool for controlling radio frequency power of a radio frequency subsystem; and
starting up (S404) the next debugging tool required to be invoked automatically or manually by prompting an operator to execute the corresponding debug task.

5. The debugging method according to claim 5, wherein the debug analysis strategy is configuration information being in one-to-one correspondence with the debugging tools, each debugging tool corresponding to one debug analysis strategy, and the configuration information of the debug analysis strategy comprises debug conditions and debugging actions, wherein the debugging actions comprise information of the next debugging tool required to be invoked when the debug conditions are met.

6. The debugging method according to claim 5, wherein the unified task information contains time segment information, task type information, specific normalized task information, wherein the time segment information is used to reflect debug task time; the task type information is used to reflect task type, including IMSI, cell, and base station task type; the specific normalized task information is specific unified task information acquired by normalizing task data of the debugging tools into one type.

## Patentansprüche

1. System mit einer intelligenten Fehlerbehebungsplattform für ein drahtloses Kommunikationssystem, **dadurch gekennzeichnet, dass** es ein Fehlerbehebungswerkzeugmodul, ein Aufgabenumwandlungsmodul, ein Fehlersuchanalysemodul und ein Aufgabenerweckungsmodul umfasst, wobei
das Fehlerbehebungswerkzeugmodul ausgestaltet ist, um eine Vielfalt von Fehlerbehebungswerkzeugen bereitzustellen;
das Fehlersuchanalysemodul ausgestaltet ist, um Fehlersuchdaten zu analysieren, die von dem aktuellen Fehlerbehebungswerkzeug gesammelt und gemeldet wurden, und um auf der Grundlage einer Fehlersuchanalysestrategie das nächste Fehlerbehebungswerkzeug zu bestimmen, das aufgerufen werden muss;
das Aufgabenumwandlungsmodul ausgestaltet ist, um eine Fehlersuchaufgabe des aktuellen Fehlerbehebungswerkzeugs zu normieren, um vereinheitlichte Aufgabeninformationen zu beschaffen, und um dann die vereinheitlichten Aufgabeninformationen in eine Fehlersuchaufgabe umzuwandeln, die dem nächsten Fehlerbehebungswerkzeug entspricht; und
das Aufgabenerweckungsmodul ausgestaltet ist, um das nächste aufzurufende Fehlerbehebungswerkzeug automatisch oder manuell zu starten, indem ein Bediener aufgefordert wird, die Fehlersuchaufgabe auszuführen, die dem nächsten Fehlerbehebungswerkzeug entspricht,
wobei die Fehlerbehebungswerkzeuge in dem Fehlerbehebungswerkzeugmodul eines der folgenden Werkzeuge umfassen:
eine Sammelvorrichtung für Einzelplatinen-Betriebsinformationen und ein Sammelmodul für Einzelplatinen-Betriebsinformationen, die ausgestaltet sind, um Betriebsbedingungen von jeder Einzelplatine im Vordergrund zu sammeln, eine Signalisierungs-Sammelvorrichtung und ein Signalisierungs-Sammelmodul, die ausgestaltet sind, um Signalisierungsbetriebsbedingungen an jeder internen Schnittstelle und an jeder Standardschnittstelle zu sammeln, eine Dienstbeobachtungs-Sammelvorrichtung und ein Dienstbeobachtungsmodul, die ausgestaltet sind, um Anrufausführungsbedingungen von verschiedenen Diensten zu sammeln, eine Sammelvorrichtung für Basisstationsdaten und ein Sammelmodul für Basisstationsdaten, die ausgestaltet sind, um einen Datenindex zu sammeln, der eine Basisstation-Seitenverbindung und eine CPU-Nutzung umfasst, eine Abnormitätserforschungs-Sammelvorrichtung und ein Abnormitätserforschungs-Sammelmodul, die ausgestaltet sind, um Informationen über einen abnormalen Betrieb während des Dienstbetriebsprozesses zu sammeln, eine Sammelvorrichtung für dynamische Ressourcen und ein Überwachungsmodul für dynamische Ressourcen, die ausgestaltet sind, um ein Überwachen des Verstopfens, des Freiräumens und des Status für verschiedene Ressourcen bereitstellen, eine Zeitgebersteuerung und
ein Zeitgebermodul, die ausgestaltet sind, um eine Konfiguration und Abfrage von Zeitgebern von jeder Einzelplatine bereitzustellen, und um einen Zeitgebertyp, ein Zeitgeberintervall und ein Aktivieren von Zeitgebern für verschiedene Zeitgeber zu definieren, oder eine Funkfrequenzsteuerung-Leistungssteuerung und ein Funkfrequenzleistungsverwaltungsmodul, die ausgestaltet sind, um eine Funkfrequenzleistung eines Funkfrequenzteilsystems zu steuern.

2. System mit einer intelligenten Fehlerbehebungsplattform nach Anspruch 1, wobei
die Fehlersuchanalysestrategie aus Konfigurationsinformationen besteht, die in einer eins zu eins Beziehung mit den Fehlerbehebungswerkzeugen stehen, wobei jedes Fehlerbehebungswerkzeug einer Fehlersuchanalysestrategie entspricht, und die Konfigurationsinformationen der Fehlersuchanalysestrategie Fehlersuchbedingungen und Fehlerbehebungsaktionen umfassen, wobei die Fehlerbehebungsaktionen Informationen über das nächste Fehlerbehebungswerkzeug umfassen, das aufgerufen werden muss, wenn die Fehlersuchbedingungen erfüllt sind.

3. System mit einer intelligenten Fehlerbehebungsplattform nach Anspruch 1, wobei
die vereinheitlichten Aufgabeninformationen Zeitsegmentinformationen, Aufgabentypinformationen und speziell normierte Aufgabeninformationen enthalten, wobei die Zeitsegmentinformationen verwendet werden, um eine Fehlersuchaufgabenzeit wiederzugeben; die Aufgabentypinformationen verwendet werden, um einen Aufgabentyp wiederzugeben, der einen IMSI-, Zellen- und Basisstation-Aufgabentyp umfasst; die speziell normierten Aufgabeninformationen spezielle vereinheitlichte Aufgabeninformationen sind, die beschafft werden, indem Aufgabendaten der Fehlerbehebungswerkzeuge auf einen Typ normiert werden.

4. Fehlerbehebungsverfahren eines Systems mit einer intelligenten Fehlerbehebungsplattform für ein drahtloses Kommunikationssystem, **dadurch gekennzeichnet, dass** es umfasst:
Analysieren (S402) von Daten, die von dem aktuellen Fehlerbehebungswerkzeug gesammelt und gemeldet werden, und Bestimmen des nächsten aufzurufenden Fehlerbehebungswerkzeugs auf der Grundlage einer Fehlersuchanalysestrategie;
Normieren (S403) einer Fehlersuchaufgabe des aktuellen Fehlerbehebungswerkzeugs, um vereinheitlichte Aufgabeninformationen zu beschaffen, und um dann die vereinheitlichten Aufgabeninformationen in eine Fehlersuchaufgabe umzuwandeln, die dem nächsten Fehlerbehebungswerkzeug entspricht, wobei die Fehlerbehebungswerkzeuge eines der folgenden Werkzeuge umfassen:
ein Werkzeug für Einzelplatinen-Betriebsinformationen zum Sammeln von Betriebsbedingungen von jeder Einzelplatine im Vordergrund, ein Signalisierung-Sammelwerkzeug zum Sammeln von Signalisierungsbetriebsbedingungen an jeder internen Schnittstelle und an jeder Standardschnittstelle, ein Dienstbeobachtungswerkzeug zum Sammeln von Anrufausführungsbedingungen für verschiedene Dienste, ein Sammelwerkzeug für Basisstationsdaten zum Sammeln eines Datenindex, der eine Basisstation-Seitenverbindung und eine CPU-Nutzung umfasst,
ein Abnormitätserforschungs-Sammelwerkzeug zum Sammeln von Informationen über einen abnormalen Betrieb während des Dienstbetriebsprozesses, ein Ressourcenüberwachungswerkzeug für dynamische Ressourcen zum Bereitstellen einer Überwachung des Verstopfens, Freiräumens und des Status für verschiedene Ressourcen, ein Zeitgebersteuerungswerkzeug zum Bereitstellen einer Zeitgeberkonfiguration und zum Abfragen jeder Einzelplatine, und zum Definieren eines Zeitgebertyps, eines Zeitgeberintervalls und eines Aktivierens von Zeitgebern für verschiedene Zeitgeber, oder ein Funkfrequenz-Leistungsverwaltungswerkzeug zum Steuern einer Funkfrequenzleistung eines Funkfrequenzteilsystems; und
Starten (S404) des nächsten aufzurufenden Fehlerbehebungswerkzeugs automatisch oder manuell, indem ein Bediener aufgefordert wird, die entsprechende Fehlersuchaufgabe auszuführen.

5. Fehlerbehebungsverfahren nach Anspruch 5, wobei
die Fehlersuchanalysestrategie aus Konfigurationsinformationen besteht, die in einer eins zu eins Beziehung mit den Fehlerbehebungswerkzeugen stehen, wobei jedes Fehlerbehebungswerkzeug einer Fehlersuchanalysestrategie entspricht, und die Konfigurationsinformationen der Fehlersuchanalysestrategie Fehlersuchbedingungen und Fehlerbehebungsaktionen umfassen, wobei die Fehlerbehebungsaktionen Informationen über das nächste aufzurufende Fehlerbehebungswerkzeug umfassen, wenn die Fehlersuchbedingungen erfüllt sind.

6. Fehlerbehebungsverfahren nach Anspruch 5, wobei
die vereinheitlichten Aufgabeninformationen Zeitsegmentinformationen, Aufgabentypinformationen, und spezielle normierte Aufgabeninformationen umfassen, wobei die Zeitsegmentinformationen verwendet werden, um eine Fehlersuchaufgabenzeit wiederzugeben; die Aufgabentypinformationen verwendet werden, um einen Aufgabentyp wiederzugeben, der einen IMSI-, Zellen- und Basisstation-Aufgabentyp umfasst; die speziellen normierten Aufgabeninformationen spezielle vereinheitlichte Aufgabeninformationen sind, die beschafft werden, indem Aufgabendaten der Fehlerbehebungswerkzeuge zu einem Typ normiert werden.

## Revendications

1. Système de plateforme de débogage intelligent destiné à un système de communication sans fil, **caractérisé en ce qu'**il comprend un module d'outils de débogage, un module de conversion de tâche, un module d'analyse de débogage, et un module d'activation de tâche, dans lequel :
le module d'outils de débogage est conçu pour procurer divers outils de débogage ;
le module d'analyse de débogage est conçu pour analyser des données de débogage collectées et rapportées par l'actuel outil de débogage et pour déterminer le prochain outil de débogage à appeler, sur la base d'une stratégie d'analyse de débogage ;
le module de conversion de tâche est conçu pour normaliser une tâche de débogage de l'actuel outil de débogage afin d'acquérir des informations de tâche unifiée, et pour convertir ensuite les informations de tâche unifiée en une tâche de débogage correspondant au prochain outil de débogage ; et
le module d'activation de tâche est conçu pour démarrer le prochain outil de débogage à appeler automatiquement ou manuellement, en invitant un opérateur à exécuter la tâche de débogage correspondant au prochain outil de débogage,
dans lequel les outils de débogage du module d'outils de débogage comprennent l'un des outils suivants :
un collecteur d'informations de fonctionnement de cartes individuelles et un module de collecte d'informations de fonctionnement de cartes individuelles, conçus pour collecter des conditions de fonctionnement de chaque carte individuelle à l'avant-plan, un collecteur de signalisation et un module de collecte de signalisation, conçus pour collecter des conditions de fonctionnement de signalisation à chaque interface interne et interface standard, un collecteur d'observation de services et un module d'observation de services, conçus pour collecter des conditions de supervision d'appels de divers services, un collecteur de données de station de base et un module de collecte de données de station de base, conçus pour collecter un index de données, y compris la liaison côté station de base et l'utilisation de l'UCT (unité centrale de traitement), un collecteur de sondes d'anomalies et un module de collecte de sondes d'anomalies, conçus pour collecter des informations de fonctionnement anormal au cours du processus de fonctionnement de services, un collecteur de ressources dynamiques et un module de contrôle de ressources dynamiques, conçus pour permettre l'oblitération, la désoblitération et le contrôle d'état de diverses ressources, un contrôleur de temporisateurs et un module de temporisation, conçus pour permettre la configuration de temporisateurs et l'interrogation de chaque carte individuelle, et pour définir le type de temporisation, l'intervalle de temporisation et l'activation de temporisateurs de différents temporisateurs, ou un contrôleur de puissance pour gestion de fréquences radioélectriques et un module de gestion de puissance radioélectrique, conçus pour régler une puissance radioélectrique de sous-système radioélectrique.

2. Système de plateforme de débogage intelligent selon la revendication 1, dans lequel :
la stratégie d'analyse de débogage consiste en des informations de configuration qui sont dans une correspondance un à un avec les outils de débogage, chaque outil de débogage correspondant à une stratégie d'analyse de débogage, et les informations de configuration de la stratégie d'analyse de débogage comprennent des conditions de débogage et des actions de débogage, dans lequel les actions de débogage comprennent des informations du prochain outil de débogage qu'il faudra appeler lorsque les conditions de débogage seront remplies.

3. Système de plateforme de débogage intelligent selon la revendication 1, dans lequel :
les informations de tâche unifiée contiennent des informations de segment temporel, des informations de type de tâche, des informations de tâche normalisée spécifique, dans lequel les informations de segment temporel servent à indiquer le temps de tâche de débogage ; les informations de type de tâche servent à indiquer le type de tâche, y compris un type de tâche relatif à l'identité internationale d'abonné mobile (IMSI, *international mobile subscriber identification*), à la cellule et à la station de base ; les informations de tâche normalisée spécifique sont des informations de tâche unifiée spécifique acquises par normalisation de données de tâche des outils de débogage en un type.

4. Procédé de débogage d'un système de plateforme de débogage intelligent destiné à un système de communication sans fil, **caractérisé en ce qu'**il comprend les étapes suivantes :
analyser (S402) des données collectées et rapportées par l'actuel outil de débogage, et déterminer le prochain outil de débogage à appeler, sur la base d'une stratégie d'analyse de débogage ;
normaliser (S403) une tâche de débogage de l'actuel outil de débogage pour acquérir des informations de tâche unifiée, et convertir ensuite les informations de tâche unifiée en une tâche de débogage correspondant au prochain outil de débogage, dans lequel les outils de débogage comprennent l'un des outils suivants : un outil d'information sur le fonctionnement de cartes individuelles destiné à collecter des conditions de fonctionnement de chaque carte individuelle à l'avant-plan, un outil de collecte de signalisation destiné à collecter des conditions de fonctionnement de signalisation à chaque interface interne et interface standard, un outil d'observation de services destiné à collecter des conditions de supervision d'appels de divers services, un outil de collecte de données de station de base destiné à collecter un index de données, y compris la liaison côté station de base et l'utilisation de l'UCT, un outil de collecte de sondes d'anomalies destiné à collecter des informations de fonctionnement anormal au cours du processus de fonctionnement de services, un outil de contrôle de ressources ressources dynamiques destiné à permettre l'oblitération, la désoblitération et le contrôle d'état de diverses ressources, un outil contrôleur de temporisateurs destiné à permettre la configuration de temporisateurs et
l'interrogation de chaque carte individuelle, et à définir le type de temporisation, l'intervalle de temporisation et l'activation de temporisateurs de différents temporisateurs, ou un outil de gestion de puissance radioélectrique destiné à régler la puissance radioélectrique d'un sous-système radioélectrique ; et
démarrer (S404) le prochain outil de débogage à appeler automatiquement ou manuellement, en invitant un opérateur à exécuter la tâche de débogage correspondante.

5. Procédé de débogage selon la revendication 5, dans lequel :
la stratégie d'analyse de débogage consiste en des informations de configuration qui sont dans une correspondance un à un avec les outils de débogage, chaque outil de débogage correspondant à une stratégie d'analyse de débogage, et les informations de configuration de la stratégie d'analyse de débogage comprennent des conditions de débogage et des actions de débogage, dans lequel les actions de débogage comprennent des informations du prochain outil de débogage qu'il faudra appeler lorsque les conditions de débogage seront remplies.

6. Procédé de débogage selon la revendication 5, dans lequel :
les informations de tâche unifiée contiennent des informations de segment temporel, des informations de type de tâche, des informations de tâche normalisée spécifique, dans lequel les informations de segment temporel servent à indiquer le temps de tâche de débogage ; les informations de type de tâche servent à indiquer le type de tâche, y compris un type de tâche relatif à l'identité IMSI, à la cellule et à la station de base ; les informations de tâche normalisée spécifique sont des informations de tâche unifiée spécifique acquises par normalisation de données de tâche des outils de débogage en un type.
